(19) **Europäisches Patentamt / European Patent Office / Office européen des brevets**

(11) **EP 2 139 137 A2**

(12) **EUROPEAN PATENT APPLICATION**

(43) Date of publication:
**30.12.2009 Bulletin 2009/53**

(51) Int Cl.:
**H04L 1/00** *(2006.01)*  **H04L 1/20** *(2006.01)*

(21) Application number: **08104684.9**

(22) Date of filing: **09.07.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **24.06.2008 EP 08104521**

(71) Applicant: **Nokia Siemens Networks OY 02610 Espoo (FI)**

(72) Inventor: **The designation of the inventor has not yet been filed**

(74) Representative: **Bruglachner, Thomas E. Nokia Siemens Networks Oy COO RTP IPR / Patent Administration 80240 Munich (DE)**

(54) **Method of and system for evaluating transmit scheme performance**

(57) A method of evaluating transmission scheme performance levels of a communication network is provided, wherein the method comprises receiving quality indicators of a specific transmission scheme and comprising an average bit error rate and a standard deviation of the bit error rate, and estimating a performance level of another transmission scheme based on the quality indicators by using an algorithm.

**Description**

<u>Field of invention</u>

The present invention relates to the field of methods of and systems for evaluating transmission scheme performance, a program element and a computer readable medium. In particular, the present invention relates to evaluating or estimating potential transmission scheme performance in mobile networks.

<u>Art Background</u>

Nowadays a plurality of services is provided by using mobile networks, e.g. 3GPP networks. For transmitting data in such a network a plurality of transmission schemes or transmission channels are provided which are based on different coding schemes. The transmission quality or performance of the different transmission schemes may change over time and may depend on current conditions of the transmission channel. In order to achieve the best possible data transmission in quality and rate the performances of the different transmission schemes would be needed so that the transmission scheme best suited may be chosen. However, in order to determine the performances of each transmission scheme each transmission scheme would have to be analysed which would lead to a high overhead of data transmitted by the user equipment which reports some quality information on a periodical basis. In order to reduce the overhead this quality information pertains only to a reduced set of transmission schemes and therefore it is not possible to evaluate the potential performance of each transmission scheme.

Therefore, there may be a need for a method and a system, a program element, and a computer readable medium providing an estimation method for performance levels for transmission schemes, in particular for transmission schemes for which no performance indicators are measured.

<u>Summary of the Invention</u>

This need may be met by the subject matter according to the independent claims. Advantageous embodiments of the present invention are described by the dependent claims.

According to an exemplary aspect of the invention there is provided a method of evaluating transmission scheme performance levels of a communication network, wherein the method comprises receiving quality indicators of a specific transmission scheme, wherein the quality indicators comprising an average bit error rate and a standard deviation of the bit error rate, and estimating a performance level of another transmission scheme based on the quality indicators by using an algorithm.

In particular, the estimation may be based on a given function and may not be based on a simulation. The quality indicators, like average bit error rates and/or standard deviations of the bit error rates, may be calculated in a calculating step. Furthermore, the standard deviation of the bit error rate may also be called standard deviation of the bit error rates of a block. In particular, this calculating step may be performed in a first network element which is distinct to a second network element. For example, the calculating step may be performed in a first network element, like a mobile phone, while the estimating step may be performed in a second network element, e.g. a base station or a relay node. In case the two steps are performed by distinct network elements, the calculating element may transmit the result of the calculation, e.g. the average bit error rate, to the second network element which then performs the estimating step. In particular, performance levels of more than one another transmission scheme may be estimated. For example, a method according to an exemplary aspect of the invention may be used to estimate performance levels of all transmission scheme for which no direct measurements of quality indicators and/or bit error rates may be available or only old measurements and/or calculations and/or estimations may be available. In particular, the average bit error rate may correspond to an average value which is averaged over a number of measurements of one single transmission scheme, i.e. it may correspond to an averaging over time. However, the calculating step and the estimating step may also be performed in a single network element of the communication network.

According to an exemplary aspect of the invention there is provided a method of choosing a transmission scheme for a transmission in a communication network, wherein the method comprises choosing a transmission scheme based on an estimation of a performance level of a transmission scheme according to a method according to a method of evaluating transmission scheme performance levels of a communication network according to an exemplary aspect of the invention.

In particular, the performance levels of a plurality of transmission schemes may be estimated according to a method according to an exemplary aspect of the invention and the transmission scheme which has the best estimated performance level may be used for a following transmission in the communication network. That is, a coding or transmission scheme may be chosen or selected which may result in a low bit or block error rate and/or a high throughput.

According to an exemplary aspect of the invention there is provided an estimating device for estimating a transmission scheme performance, the device comprising a receiving unit adapted for receiving quality indicators associated with a specific transmission scheme and comprising an average bit error rate and a standard deviation of the bit error rate and an estimating unit adapted for estimating a performance of another transmission scheme based on the quality indicators by using an algorithm.

According to an exemplary aspect of the invention there is provided a system for estimating a transmission scheme performance, the system comprising an estimating device according to an exemplary aspect of the invention and a determining unit adapted to determine the quality indicators.

According to an exemplary aspect of the invention a program element is provided, which, when being executed by a processor, is adapted to control or carry out a method according to an exemplary aspect of the invention.

According to an exemplary aspect of the invention a computer-readable medium, in which a computer program is stored which, when being executed by a processor, is adapted to control or carry out a method according to an exemplary aspect of the invention.

The term "algorithm" may particularly denote a calculation instruction like a function, e.g. a quadratic form, and may be distinct to a look up in a look up table. That is, the performance of the another transmission scheme may be determined based on a calculation which may be performed online and may not be calculated in advance. In particular, it may thus be possible to provide a dynamic estimation while using a look up table only a static or stable table may be provided.

The term "transmission scheme" may in particular denote a transmission channel, for example, which may be chosen according to current conditions to transmit data in a wireless network. A transmission scheme may be characterized by a coding scheme which is used to encode or decode data transmitted or to be transmitted in a wireless network or mobile communication network. In particular, a transmission scheme may have two main characteristics: the symbol constellation (or modulation) employed (e.g., QPSK, 16QAM, 32QAM) and the coding scheme (e.g. defined by the channel encoder type, its rate, the interleaving depth, etc). A natural grouping of the transmission schemes may be given by the symbol constellation employed. This is due to the fact that the block error rate or throughput of the different coding schemes associated to the same symbol constellation may be a function of the arithmetic mean and the standard deviation of the bit error rates corresponding to a group of bursts.

The term "quality indicators" may particularly denote indicators or values indicating the quality or performance level of a given or specific transmission scheme or transmission channel of a wireless network, e.g. a number of bit errors, a bit error rate, an average bit error rate, or a carrier to interference ratio may form a quality indicator or may be deducible from a quality indicator. Based on these quality indicators a decision may be based which transmission scheme shall be applied in order to achieve an optimal transmission with respect to highest performance of the transmission or communication, e.g. with respect to low error rates or high data transmission.

By providing an estimation by using an algorithm which may be a function of the quality indicators and/or of the calculated bit error rates it may be possible to provide a dynamic estimation of transmission schemes which are presently not used or from which at least at the time of estimation no up to date quality indicators, bit error rates or carrier to interference ratios are known. In particular, it may be possible to perform the estimation step online in a network element, e.g. a base station, relay node or mobile network element, of the communication or link network.

In particular, a prediction mechanism may be provided which is able to estimate the missing performance indicators, e.g. average bit error rates, based on the ones that are known. This may allow making a better link adaptation decision, which translates to a better quality of the service, as perceived by a user; even in cases only quality indicators for a reduced set of transmission schemes are known. Such a link adaptation decision may be performed by a network element, e.g. a base station of a mobile communication network.

In other words, a mechanism for predicting the throughput of coding schemes for which there are no quality indicators available, e.g. because a network element like a mobile phone has reported only measurements of available modulation under a different symbol constellation, may be provided. Therefore, it may enable a link adaptation algorithm to consider the full set of possible coding schemes, when choosing the next transmission scheme.

A gist of the exemplary aspect may be seen in providing a method of estimating performance levels of transmission schemes for which no quality indicators are measured. That is, missing performance levels or quality indicators may be estimated based on measured quality indicators of another transmission scheme. The estimation may be based on an algorithm or function and may thus be online calculable and may not be calculated in advance and stored in a memory. Furthermore, the estimation may be based on the average bit error rate and the standard deviation of the bit error rate. In particular, the average bit error rate may be a time average and the standard deviation may correspond to a standard deviation of burst-wise bit error rates associated to a block.

This method and system according to an exemplary aspect of the invention may be primarily targeted to GERAN data services with link adaptation (EGPRS, EGPRS2, and relevant data services of 3GPP Release 7 and beyond), but may also be used with other systems with limited quality information reporting about the used modulations.

Next, further exemplary embodiments of the method of evaluating transmission scheme performance levels of a communication network are described. However, these embodiments also apply to the system for evaluating transmission scheme performance levels of a communication network, the program element, and the computer readable medium.

According to another exemplary embodiment the method further comprises determining the quality indicators in a first network element. In particular, the first network element may be a mobile network element, e.g. a mobile phone, a PDA, or laptop computer. Specifically the quality indicators may include an average bit error rate and/or the standard deviation of the bit error rate and may relate to a specific transmission scheme or transmission channel employing a specific coding scheme or symbol constellation.

According to another exemplary embodiment of the method the estimating comprises a calculation of a carrier to interference ratio of the another transmission scheme. That is, according to an exemplary embodiment a calculation may be performed which calculates a carrier to interference ratio (CIR) of a second transmission scheme by using the average bit error rate of a first transmission scheme. Furthermore, also the standard deviation of the bit error rate may be used to calculate the CIR of the another transmission scheme.

According to another exemplary embodiment of the method a plurality of carrier to interference ratios is calculated. Each one of plurality of the carrier to interference ratio may be calculated based on another average bit error rate and/or standard deviation of bit error rate or all of the plurality of carrier to interference ratios may be calculated based on the same average bit error rate and/or deviation of bit error rate. The plurality of CIR may form a tuple. In particular, a mean carrier to interference ratio may be calculated by averaging the plurality of carrier to interference ratios.

It should be mentioned that in general in this application the term "average" relates to the averaging of a single transmission scheme over time, while the term "mean" or "mean value" may relate to the averaging or calculating a mean value out of a plurality of quality indicators or bit error rates or carrier to interference ratios relating to different transmission schemes. Thus, the term "average" may relate to any average value calculated for a single transmission scheme, e.g. averaged over a plurality of values associated for that single transmission scheme, while the term "mean" may relate to an averaging over values associated with several different transmission schemes.

According to another exemplary embodiment of the method the estimation of the performance level comprises a mapping of the carrier to interference ratio of the another transmission scheme to an estimated bit error rate of the another transmission scheme.

In particular, a bit error rate for each burst under a target constellation may be computed from each carrier to interference rate (CIR) for each burst. It should be noted that the CIR may differ from the CIR determined with an inverse mapping by a scaling factor related to the number of bits per symbol on the source and target constellation.

According to another exemplary embodiment of the method the performance level may be estimated based on the estimated bit error rate of the another transmission scheme.

According to another exemplary embodiment of the method the estimation is further based on a former performance level of the another transmission scheme. That is, in case that for the transmission scheme or transmission channel a former performance level is available this former performance level may additionally be used in order to achieve an improved estimation of an up to date performance level. Thus, an update of the performance level may be possible so that the estimation of the performance level or quality of the transmission scheme may be more exact.

According to another exemplary embodiment of the method the algorithm is a function of the average bit error rate and a deviation of the bit error rate.

In particular, the deviation or variance of the bit error rate may be calculated together with the average bit error rate and the estimating step may then be based on both the average bit error rate and the corresponding deviation of the bit error rate. By using the deviation or variance as well for the calculation step it may be possible to improve the result of the estimated performance level of the another transmission scheme.

According to another exemplary embodiment of the method the function is a quadratic form formulation of the average bit error rate and the deviation of the bit error rate.

According to another exemplary embodiment of the method the quadratic form formulation corresponds to:

$$\vec{x}^{T} Q\, \vec{x} - b\vec{x} + c = 0$$

wherein $\bar{x}$ represents a vector or tuple of BER values for a group of bursts representing a data block, Q represents a quadratic matrix, e.g. a (N-1)x(N-1), b is a vector of size (N-1), and c is a constant. In particular, N may be the number of bursts per block. In case of a four burst block the formula may denote

$$\vec{x}^{T}\begin{bmatrix} 2 & 1 & 1 \\ 1 & 2 & 1 \\ 1 & 1 & 2 \end{bmatrix}\vec{x} - 8\mu\begin{bmatrix} 1 & 1 & 1 \end{bmatrix}\vec{x} + 12\mu^2 - 3\sigma^2 = 0 \text{ ,}$$

wherein $\mu$ represents the mean bit error rate, and $\sigma$ represents the standard deviation of the bit error rate.

In general the matrix may be a square matrix of size $N$-1 and $\bar{x}$ is a vector or tuple of size $N$-1, wherein N is the number of bursts in a block. The quadratic form formulation may enable a calculation of feasible tuples, where each tuple contains $N$-1 bit error rates, upon the missing $N^{th}$ BER may be computable as well, e.g. based on the boundary condition that the arithmetic mean of all $N$ values equals $\mu$. These $N$ bit error rates may satisfy that the arithmetic mean of the $N$ values equals the reported variable $\mu$, i.e. the mean of the bit error rates of the block and that the standard deviation equals the reported $\sigma$, i.e. standard deviation of the bit error rates of the blocks.

In particular, in a next step burst wise CIRs may be computed by inverting the CIR to BER mapping $f()$ of the "source" symbol constellation, i.e. the constellation for which the measurements of $\mu$ and $\sigma$ are available..

In particular, data processing, signal processing, or calculation which may be performed according to embodiments of the invention can be realized by a computer program, i.e. by software, or by using one or more special electronic optimization circuits, that is in hardware, or in hybrid form, that is by software components and hardware components.

Summarizing, according to an exemplary aspect of the invention a method may be provided which analytically predicts an uncoded performance level (mean and variance of burst-wise bit error rate for a group of bursts) under a certain symbol constellation or transmission scheme, based on existing information belonging to a different constellation or transmission scheme. This may provide a link adaptation algorithm with all the information required to make a decision that possibly considers all the possible coding schemes.

A key difference of an exemplary embodiment of the invention compared with previous solutions may be the fact that the prediction is made on the basis of all the available information, which consists of average and standard deviation of the bit error rate under a given symbol constellation or transmission scheme. The respective exemplary implementation may be summarized as follows: 1) Given the average bit error rate and the standard deviation of the bit error rates reported by a mobile, a set of plausible tuples of burst-wise carrier to interference ratio (CIR) is computed, based on a quadratic form formulation 2) For each tuple of CIRs, the bit error ratios under the "target" modulation are computed, based on CIR to bit error rates (BER) mapping, 3) The average and standard deviation of each tuple of BERs so computed are averaged across the set of tuples to achieve a mean value and 4) the resulting predicted mean value and standard deviation of BER is used to predict the throughput or block error rate under the coding schemes of the target constellation, through the use of the corresponding link level results mappings. The proposed method or mechanism of the invention might be employed in every data connection,

In particular, the mobile may transmit the average and standard deviation of the uncoded bit error rate, which represents the link performance under a given symbol constellation (e.g., 4/16/32 QAM), and that may be used to estimate the throughput under any coding scheme using the same symbol constellation. Thus, the invention may provide a mechanism to estimate the uncoded bit error rate under a certain symbol modulation, given the measurements available, which belong to a different constellation possibly enabling that the throughput for coding schemes under a different constellation may be considered, in order to make a fully informed link adaptation decision. For example, in EGPRS2 downlink, the transmission or transmit schemes DBS5 and DBS6 use a 4QAM constellation, while the transmit schemes DBS7, DBS8 and DBS9 employ 16QAM. Since all the aforementioned schemes interleave the data bits over 4 bursts, the probability of decoding error for a data block is determined from the set of 4 (uncoded) bit error rates associated to the 4 bursts on which the bits where transmitted. These mean and standard deviation may be averaged in time and reported by the MS

The method according to an exemplary aspect of the invention may be able to estimate analytically the performance of a yet unused modulation or transmission scheme, which is not thereby included in the reported quality measurements. It may in particular useful for a service, where some quality report information exists, but it is outdated (therefore not usable for link adaptation). In this case the most recent reported quality information can be used to predict the performance of all the available modulations with outdated reports.

One benefit using the method according to an exemplary aspect of the invention, e.g. example of a specific problem, relates to 3GPP Change Request GP-080948 where modifications of the EGPRS2-A and EGPRS2-B downlink modulation and coding families in support of improved uplink state flag (USF) and personal area network (PAN) multiplexing are done. For the EGPRS2 downlink, new coding schemes may be added to the link adaptation families in order to improve the throughput for cases in which the target mobile for the USF or PAN is different than the target mobile for the data. By estimating the channel quality information for each connection and converting the estimates to other multiplexed modulations/constellations it may be possible that the data throughput is not significantly degraded when using USF and PAN multiplexing EGPRS2-A, EGPRS2-B and EGPRS mobiles. It may also enable a multiplexing EGPRS2-A and EGPRS2-B mobiles to the same timeslot.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered to be disclosed with this application.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawings

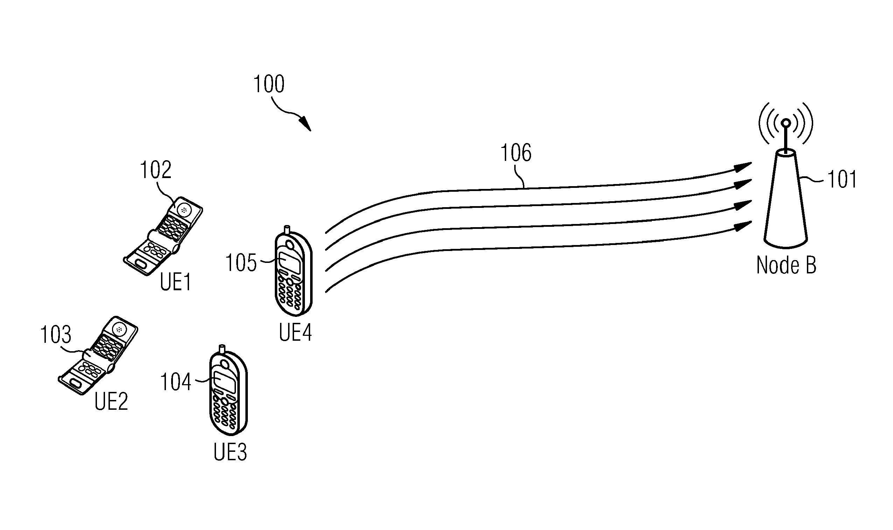

Figure 1 shows a schematically illustration of a communication system in which a method according to an exemplary embodiment may be used.

Detailed Description

The illustration in the drawing is schematically.

Fig. 1 shows a schematically illustration of a communication system 100. The communication system comprises a base station or node 101 and a plurality of user equipments 102, 103, 104, and 105. For sake of clarity only four user equipments are shown in Fig. 1. The user equipments may be mobile phones, PDAs or the like. For communication in the communication system a plurality of transmission schemes can be used. The plurality of transmission schemes is indicated in Fig. 1 by the plurality of arrows 106 between the user equipment 105 and the base station 101. The user equipments communicate with the base station by using one out of the plurality of transmission schemes. Together with the data quality indicators measured by the user equipment may be transmitted to the base station. However, the user equipment can not report measurements for every transmission scheme and corresponding symbol constellation due to signaling bandwidth limitations.

In order to achieve a good performance of the data connection the transmission scheme best suited should be used. In the following a method for determining the best suited transmission scheme according to an exemplary embodiment of the invention is described in more detail.

As already mentioned a key difference with previous solutions is the fact that the prediction is made on the basis of all the available information, which consists of average and standard deviation of the bit error rate under a given symbol constellation instead of using the reported mean bit error rate alone.

The method according to this exemplary embodiment can be summarized as follows: 1) Given the average and standard deviation reported by the user equipment, e.g. mobile, a set of plausible tuples of burst-wise carrier to interference ratio is computed, based on a quadratic form formulation 2) For each tuple of CIRs, the bit error ratios under the "target" modulation are computed, based on CIR to BER mapping, 3) The arithmetic mean and standard deviation of each tuple of BERs so computed are averaged across the set of tuples and 4) the resulting predicted average and standard deviation of BER is used to predict the throughput or block error rate under the coding schemes of the target constellation, through the use of the corresponding link level results mappings.

In particular, the step 1) can be described as:

- In a first step the average $\mu$ and standard deviation $\sigma$ of BER are calculated and reported by the mobile phone to the base station.
- In a second step the carrier to interference ratio (CIR) values for a group of bursts representing a data block are calculated. The BER may form a vector or tuple of N elements or components wherein N corresponds to the bursts in a block. The components may be written as $x_1, x_2, ..., x_N$, in case of an interleaving depth of N bursts.
- In order to solve the values $\{x_i\}$ that have $\mu, \sigma$ as average and standard deviation, the following equation is solved:

$$- \quad \vec{x}^{T}\begin{bmatrix} 2 & 1 & 1 \\ 1 & 2 & 1 \\ 1 & 1 & 2 \end{bmatrix}\vec{x} - 8\mu\begin{bmatrix} 1 & 1 & 1 \end{bmatrix}\vec{x} + 12\mu^2 - 3\sigma^2 = 0$$

This quadratic form is for the particular case of 4 bursts per block, in general the matrix is a square matrix of size $N$-1 and $\overline{x}$ is a vector of size $N$-1.

- Numerical methods can be used to determine the vector $\overline{x}$, given $\mu,\sigma$. Given $\overline{x}$, the remaining BER value is computed as

$$x_1 = N\mu - \sum_{i=2}^{N} x_i$$

- Given the BER values $\{x_i\}$, the link level results providing the CIR to expected BER mapping is inverted. If $f(\cdot)$ is such a mapping, then the CIR value associated to $x_i$ is determined as $\rho_i = f^{-1}(x_i)$ for $x_i$>0. If $x_i$ =0, then the CIR is a predetermined "maximum practical CIR" value, which may guarantee that the expected BER is 0, for the "source" symbol constellation.
- Finally, the predicted uncoded performance under the target constellation is obtained as

$$\mu' = \frac{1}{N}\sum_{i=1}^{N} f_t(\rho_i) \ , \ \sigma' = \frac{1}{N-1}\sum_{i=1}^{N}\left(f_t(\rho_i) - \mu'\right)^2 \ ,$$

wherein $f_t()$ represents the CIR to expected BER mapping for the target symbol constellation. It should be noted that a scaling factor may be necessary in order to perform a scaling of the CIR to normalize it to a per bit quantity. In case the solution for the root of the quadratic form gives more than one set of solutions, the average of the quantities $\mu',\sigma'$ may be used. The predicted average and standard deviation of BER under the target symbol constellation can be used to predict the throughput or block error rate for any coding scheme for which a suitable mapping is available.

The quadratic form formulation for another $N$>1 may be achieved by the following considerations:

Starting from the $N$ variables $x_i$ for i=1 to $N$. which represent the bit error rates of each burst.
Using arithmetic mean equation to express one of the bit error rates in term of the other bit error rates and the reported arithmetic mean

$$\mu : \quad x_1 = N\mu - \sum_{i=2}^{N} x_i \ .$$

Arrange the remaining variables in a vector $\overline{x}$ of size $N$-1.

Writing the standard deviation of the bit error rate and make it equal to the reported standard deviation $\sigma$, i.e.

$$\frac{1}{N-1}\sum_{i=1}^{N}\left(x_i - \mu\right)^2 - \sigma = 0 \ .$$

Inserting the variable $x_1$ into the equation, so that only $x_2,...,x_N$, $\mu$ and $\sigma$ are present.
Finally the matrix Q and the vector b may be built so that the equation reads $\overline{x}^T Q\overline{x} + \overline{b}^T x + c$=0, which can be solved numerically with the additional restrictions or boundary conditions that $0 \leq x_i \leq 1$; $i=1,...,N$.

It should be noted that any set of $x_i$ for i=1 to *N* which satisfy the above equation will have arithmetic mean and standard deviation equal to the reported $\mu,\sigma$. In particular, every quadratic form formulation ensuring that the condition stated above is fulfilled may be implemented in a method according to an exemplary embodiment of the invention.

Another choice of mapping $f(\cdot)$ is an approximation of the bit error probability for M-QAM constellations in Gaussian noise, which serves as a conditional BEP (given the CIR). The following approximation may be used

$$f(\rho) = \frac{4\sqrt{M}-1}{\log_2(M)\sqrt{M}}\left( Q\left( \frac{2\log_2(M)}{M-1}\rho \right) + Q\left( \frac{9\log_2(M)}{M-1}\rho \right) \right),$$

which is known from "M-PSK and M-QAM BER computation using signal-space concepts", Jianhua et al., Communications, IEEE Transactions on, 1999, Vol. 47, pages 181 to 184. and wherein $\rho$ is the CIR and *M* is the constellation size (e.g., 4 for QPSK). An alternative is to use a parametric model for $f(\cdot)$, with parameters adjusted to match link level simulations. Parametric models of interest include an exponential model and cubic Bézier curve.

The method may be used to rank the modulations and report only the ones (within the signalling bandwidth), which are estimated to be relevant for the next data transmission period. This methodology may report therefore only the relevant information and modulations and coding schemes, which are not practical for the next transmission period may automatically be left out. Another benefit may be that the signalling bandwidth does not need to be extended.

The method may be used in connection with the 3GPP standardization contribution and may be helpful if Link Adaptation messages between mobile and base station cannot carry information of all the possible modulations, because number of possible modulations to be reported must be restricted, for example, since the signaling bandwidth is not large enough to carry information about all the possible modulations.

A method according to an exemplary embodiment of the invention may also have potential for implementation in a mobile station. A mobile station is reporting used modulations in uplink, but since the signalling bandwidth is limited, not all modulations can be reported. The method may be used to rank the modulations and report only the relevant ones within the bandwidth limitation.

Summarizing, an algorithm according to an exemplary embodiment may seek to predict both the arithmetic mean and standard deviation of the bit error rates associated to the block that would be attained if a different symbol constellation were used. From these two values, the block error rate or throughput (the transmission scheme performance indicator) of each coding scheme employing this symbol constellation may be determined, e.g. by employing a two-variable function or a two-entry lookup table that are assumed available.

The algorithm may first compute tuples of bit error rates that can originate the reported mean and standard deviation of the bit error rates of the bursts associated to the data block. For example, each block has four associated bursts, and given the mean and standard deviation reported by the mobile station (MS) (which may be time averages), several quartets may be found, such that each of them may have the same arithmetic mean and standard deviation. For each tuple, the CIRs are computed by inverting the CIR to BER mapping f() corresponding to the symbol constellation for which the measurements were made. Then the CIR to BER mapping of the target symbol constellation may be used with those CIRs to compute bit error rates per burst, upon which the arithmetic mean and standard deviation are calculated. It should be noted that there may be a scaling of the CIR due to the different number of bits per symbol in the constellations, required because the argument of the CIR to BER mapping may be a ratio normalized to the number of bits per symbol. Finally, the arithmetic mean of the means and the arithmetic mean of the deviations (mean over the values computed for each tuple) may be used as prediction for the target symbol constellation. This may then be used to evaluate the performance of the coding schemes that employ the target symbol constellation.

It should be noted that the term "comprising" does not exclude other elements or steps and the "a" or "an" does not exclude a plurality. Also elements described in association with different embodiments may be combined. It should also be noted that reference signs in the claims should not be construed as limiting the scope of the claims.

List of reference signs :

100    Communication system
101    Base station
102    User equipment

103 User equipment
104 User equipment
105 User equipments
106 Transmission schemes

**Claims**

1. A method of evaluating transmission scheme performance levels of a communication network, the method comprising:

    receiving quality indicators associated with a specific transmission scheme and comprising an average bit error rate and a standard deviation of the bit error rate;
    estimating a performance level of another transmission scheme based on the quality indicators by using an algorithm.

2. The method according claim 1, further comprising:

    determining the quality indicators in a first network element.

3. The method according to claim 1,
   wherein the estimating comprises a calculation of a carrier to interference ratio of the another transmission scheme.

4. The method according to claim 3,
   wherein a plurality of carrier to interference ratios is calculated.

5. The method according to claim 3,
   wherein the estimation of the performance level comprises a mapping of the carrier to interference ratio of the another transmission scheme to an estimated bit error rate of the another transmission scheme.

6. The method according to claim 5,
   wherein the performance level may be estimated based on the estimated bit error rate of the another transmission scheme.

7. The method according to claim 1,
   wherein the estimation is further based on a former performance level of the another transmission scheme.

8. The method according to claim 1,
   wherein the algorithm is a function of an average bit error rate and a standard deviation of the bit error rate.

9. The method according to claim 8,
   wherein the function is a quadratic form formulation of the average bit error rate and the standard deviation of the bit error rate.

10. The method according to claim 9,
    wherein the quadratic form formulation corresponds to:

$$\vec{x}^{T} Q\, \vec{x} - b\vec{x} + c = 0$$

wherein $\bar{x}$ represents a tuple of bit error rates values for a group of bursts representing a data block, Q represents a quadratic matrix, b represents a vector, and c represents a constant.

11. A method of choosing a transmission scheme for a transmission in a communication network, the method comprising:

    choosing a transmission scheme based on an estimation of a performance level of a transmission scheme according to a method according to claim 1.

**12.** An estimating device for estimating a transmission scheme performance, the device comprising:

a receiving unit adapted for receiving quality indicators associated with a specific transmission scheme and comprising an average bit error rate and a standard deviation of a bit error rate; and
an estimating unit adapted for estimating a performance of another transmission scheme based on the quality indicators by using an algorithm.

**13.** A system for estimating a transmission scheme performance, the system comprising:

an estimating device according to claim 12, and
a determining unit adapted to determine the quality indicators.

**14.** A program element, which, when being executed by a processor, is adapted to control or carry out a method according to claim 1.

**15.** A computer-readable medium, in which a computer program is stored which, when being executed by a processor, is adapted to control or carry out a method according to claim 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Jianhua et al.** M-PSK and M-QAM BER computation using signal-space concepts. *Communications, IEEE Transactions on,* 1999, vol. 47, 181-184